# EUROPÄISCHE PATENTANMELDUNG

(11) **EP 4 431 420 A1**
(43) Veröffentlichungstag der Anmeldung: **18.09.2024**
(21) Anmeldenummer: 24161808.1
(22) Anmeldetag: 06.03.2024
(51) Int. Cl.: B65G 1/137, B65B 5/02, B65B 35/32, B65G 47/61, B65G 57/06, B65G 57/10, B65G 13/10, B65G 39/02, B65G 47/22

(54) **KOMMISSIONIERANLAGE**

(30) Priorität: 13.03.2023 CH 2852023; 31.05.2023 CH 5782023; 13.07.2023 CH 7532023; 30.11.2023 CH 13372023
(71) Anmelder: FERAG AG, 8340 Hinwil (CH)
(72) Erfinder: Ramseier, Marcel, 8340 Hinwil (CH); Guhl, Simon, 8340 Hinwil (CH); Fenile, Roberto, 8340 Hinwil (CH)
(74) Vertreter: Rentsch Partner AG

(57) **Zusammenfassung**

Die vorliegende Offenbarung bezieht sich auf eine Kommissionieranlage (1) zum Transport und dem Bereitstellen von Stückgütern (S, S') umfasst eine Anfördervorrichtung (2), umfassend einen Hängeförderer (21) zum Anfördern der Stückgüter (S, S'), sowie eine Abgabestation (22) zum Abgeben der Stückgüter (S, S') vom Hängeförderer (2.1) an eine Übergabevorrichtung (3) zum Zusammenstellen der angeförderten Stückgüter (S, S'), welche Übergabevorrichtung (3) ein horizontal verfahrbares Übergabeelement (31) aufweist, mittels dem die Stückgüter (S, S') auf einen Zusammenstellplatz (P) schwerkraftgetrieben zusammenstellbar sind. Die vorliegende Offenbarung umfasst ferner ein Verfahren zum Transport und dem Bereitstellen von Stückgütern (S, S') mittels der Kommissionieranlage (1).

## Beschreibung

### GEBIET DER OFFENBARUNG

Die vorliegende Offenbarung betrifft eine Kommissionieranlage mit einer Übergabevorrichtung, welche ein horizontal verfahrbares Übergabeelement aufweist, sowie ein Verfahren zum Transport und dem Bereitstellen von Stückgütern mittels der Kommissionieranlage.

### HINTERGRUND DER OFFENBARUNG

DE10346122A1 wurde am 21.04.2005 im Namen der Beumer Maschinenfabrik GmbH & Co. KG veröffentlich und offenbart eine Vorrichtung zum Einschleusen von Stückgutteilen auf einen Sorter, mit einem Zuförderer, von dem die Stückgutteile vorzugsweise in einer vorgegebenen Ausrichtung zugefördert werden und an seinem Abgabeende gesteuert einzeln auf einen Übernahmeplatz eines dem Zuförderer unmittelbar nachgeordneten Übernahmeförderers zu übergeben sind, von dem aus jeweils ein Stückgutteil gesteuert auf einen Aufnahmeplatz des dem Übernahmeförderer nachgordneten Sorters zu übergeben ist. Ein Zwischenförderer mit einer oberhalb der Förderebene des Übernahmeförderers angeordneten und in Förderrichtung des Zuförderers reversierbar antreibbaren Stützplatte zur Aufnahme des Stückgutteils dient der Abgabe der Stückgutteile an den Übernahmeförderer.

CH719043A1 wurde am 14.04.2023 im Namen der Anmelderin veröffentlicht und offenbart eine Übergabevorrichtung zur Übergabe von Fördergütern, wie Liegewäre, von einem Zuförderer auf Förderplätze eines Wegförderers. Die Übergabevorrichtung bildet einen ortsfesten Aufnahmeraum für mindestens ein Fördergut aus, welcher nach unten durch ein bewegbares Auflageorgan begrenzt ist. Das Auflageorgan ist mittels einer Bewegungseinrichtung zwischen einer Auflageposition, in welcher das mindestens eine Fördergut dem Auflageorgan flächig aufliegt, und einer Abgabeposition, in welcher das Fördergut mittels Schwerkraft durch eine frei gegebene Übergabeöffnung nach unten, auf einen unterhalb des Aufnahmeraums vorbei bewegten Förderplatz des Wegförderers fällt, bewegbar.

### DARSTELLUNG DER OFFENBARUNG

Während es bei Bestellungen im Business to Business (B2B) Bereich weniger Bestellungen aber hierfür mit grossem Volumen und gleichen Produktfolgen gibt, da Unternehmen Produkte typischerweise in grossen Stückzahlen anfordern, gibt es im Business to Customer (B2C) Bereich typischerweise viele Einzelbestellungen mit Einzelabgaben der Waren oder kleinen Volumen und kleinen Stückzahlen, die zudem auch noch saisonbedingt hohe Fluktuationen aufweisen können. Stückgüter können hierbei eine sehr grosse Bandbreite an verschiedenen Produkten sein. Beispielsweise müssen gleichzeitig sowohl eigenstabile Produkte, wie etwa Pakete, Boxen oder Bücher, als auch flexible und im Wesentlichen flache Stückgüter wie etwa Magazine oder gar einzelne lose und nur mit einer flexiblen Schutzhülle verpackte Kleidungsstücke kommissioniert werden.

Im Bereich der Kommissionierung von Stückgütern wird insbesondere bei Business to Customer (B2C) Kommissionierungen bei der Auftragsabwicklung oder Bestellabwicklung gefordert, in ein und derselben Anlage diverse Arten von Stückgütern verarbeiten und kommissionieren zu können. Weiterhin sollen in derselben Anlage die einzelnen Bestellungen auch zusammengestellt und am Ausgang der Anlage sollen diese kommissionierten Bestellungen auch direkt versandfertig verpackt bereitgestellt werden. In den bekannten Anlagen werden die angelieferten Waren in Schalen oder derartigen Tarnsportbehältnissen angeliefert und dann zumeist manuell in von der Grösse her passende Kartonagen verpackt. Dieser Schritt ist folglich sehr arbeitsintensiv.

Eine Aufgabe der Erfindung kann darin gesehen werden eine Kommissionieranlage bereitzustellen, die ein effizienteres Bereitstellen von Warensendungen für die Verpackung mit unterschiedlichsten Produktkategorien ermöglicht.

Eine erfindungsgemässe Kommissionieranlage zum Transport und dem Bereitstellen von Stückgütern umfasst üblicherweise zumindest eine Anfördervorrichtung. Die Anfördervorrichtung umfasst einen Hängeförderer zum Anfördern der Stückgüter, sowie eine Abgabestation zum Abgeben der Stückgüter vom Hängeförderer an eine Übergabevorrichtung, zum Zusammenstellen der angeförderten Stückgüter. Die Übergabevorrichtung weist typischerweise ein horizontal verfahrbares Übergabeelement auf, mittels dem die Stückgüter auf einen Zusammenstellplatz schwerkraftgetrieben zusammenstellbar sind. Horizontal ist im Kontext der vorliegenden Offenbarung nicht im geometrischen Sinn als exakt vertikal zur Vertikalen zu verstehen, sondern schliesst auch noch eine Neigung von ± 10° ein.

Das Übergabeelement kann hierbei zum reinen Übergeben der Stückgüter an eine nachgelagerte Vorrichtung dienen. Typischerweise ist der Zusammenstellplatz auf einem Abföderer angeordnet. Alternativ oder in Ergänzung kann das Übergabeelement aber auch derart ansteuerbar sein, dass nacheinander angeförderte Stückgüter auf einem Zusammenstellplatz stapelbar sind oder zueinander versetzt und/oder miteinander mindestens teilweise überlappend auf einen gemeinsamen Zusammenstellplatz übergebbar sind.

Es kann auch eine alternative erfindungsgemässe Kommissionieranlage zum Transport und dem Bereitstellen von Stückgütern bereitgestellt werden. Diese kann ebenfalls eine Anfördervorrichtung umfassen, die einen Hängeförderer zum Anfördern der Stückgüter, sowie eine Abgabestation zum Abgeben der Stückgüter vom Hängeförderer an eine Übergabevorrichtung umfasst. Die Übergabevorrichtung kann zum Zusammenstellen der von der Abgabestation abgegebenen Stückgüter einen Anförderer aufweisen, mittels dem die Stückgüter auf einen Zusammenstellplatz schwerkraftgetrieben zusammenstellbar sind. Die Stückgüter können hierbei mittels des Anförderers von der Abgabestation übernommen werden und an einen Zusammenstellplatz weiterbefördert werden. Dieser Zusammenstellplatz kann auf einem Abförderer angeordnet sein, wobei die Stückgüter vom Anförderer schwerkraftgetrieben auf den Abförderer übergeben werden. Die Stückgüter können hierbei nicht geordnet vom Anförderer auf einen Haufen auf den Zusammenstellplatz übergeben werden.

Es handelt sich bei der alternativen Ausführungsform der Kommissionieranlage um ein eigenständiges Konzept und die Anmelderin behält sich vor, diese und die übrigen damit technisch vereinbaren Merkmale der Offenbarung in Form einer Teilanmeldung weiterzuverfolgen.

Die Stückgüter werden mittels des Hängeförderers an die Übergabevorrichtung angeliefert. Der Hängeförderer der Anfördervorrichtung umfasst typischerweise Hängeförderaufnahmemittel in Form von Taschen, Körben, Beuteln oder Tragschlaufen, mittels derer die Stückgüter hängend förderbar sind. Die Hängeförderaufnahmemittel in Form von Taschen, Körben, Beuteln oder Tragschlaufen zum Abgeben der Stückgüter vom Hängeförderer sind ausleerbar, insbesondere Ausleerbar durch schwenken der Hängeförderaufnahmemittel.

Zum Fördern der Hängeförderaufnahmemittel umfasst der Hängeförderer typischerweise mindestens eine Schiene, an der die Hängeförderaufnahmemittel mittels Laufwagen hängend förderbar sind. Die Hängeförderaufnahmemittel sind typischerweise über eine Öffnung an der Oberseite oder über eine Öffnung in der Seite entleerbar. Hierzu können diese nach hinten verschwenkt werden, um ein darin aufgenommenes Stückgut über die Öffnung an der Oberseite zu entleeren oder zur Seite geschenkt werden um das darin aufgenommene Stückgut über die Öffnung in der Seite zu entleeren.

Die Hängeförderaufnahmemittel können in Form von Hängefördertaschen mit einer Rückwand und einer Vorderwand ausgeführt sein, die mindestens über einen Bodenabschnitt derart flexibel miteinander verbunden sind, dass sie zwischen einem ersten Zustand, in welchem sie eine offene und befüllbare Tasche bilden, und einem zweiten Zustand, in welchem sie dicht nebeneinanderliegen und eine zusammengeklappte Tasche bilden, hin und her bewegbar sind.

Der Hängeförderer schliesst typischerweise direkt an die Abgabestation an, welche üblicherweise eine Entleerungsvorrichtung umfasst. Der Hängeförderer oder auch mehrere Hängeförderer können hierbei die Übergabevorrichtung mit stromaufwärts angeordneten Vorrichtungen verbinden. Mittels des Hängeförderers kann somit eine Anlieferung der Waren mit dem Abtransport der Waren innerhalb einer Logistikanlage verbindbar sein, wodurch der Warenfluss herstellbar ist.

Die Entleerungsvorrichtung kann ein umlaufendes Förderband zur Übernahme von in den Hängeförderaufnahmemitteln transportierten Stückgütern umfassen. An einem Kontaktabschnitt kann der Förderweg des Hängeförderers und der Förderweg des Förderbands derart zueinander angeordnet sein, dass der Abstand des Förderwegs des Hängeförderers und des Förderwegs des Förderbands kontinuierlich kleiner wird, sodass bei der Förderung eines Hängeförderaufnahmemittels entlang des Kontaktabschnitts eine Vorderseite des Hängeförderaufnahmemittels das Förderband kontaktiert und auf diesem zu liegen kommt und dabei die Hängeförderaufnahmemittel nach hinten oder alternativ zur Seite geschwenkt werden.

In einem Übergabeabschnitt kann der Förderweg des Hängeförderers und der Förderweg des Förderbands im Wesentlichen parallel zueinander mit einem gewissen Gefälle nach unten verlaufen, wobei die Vorderseite des jeweiligen Hängeförderaufnahmemittels bei der Förderung entlang des Übergabeanschnitts weiterhin auf dem Förderband liegt, sodass die Öffnung des Hängeförderaufnahmemittels schräg nach unten orientiert ist und das in dem Hängeförderaufnahmemittel vorhandene Stückgut aus dem Hängeförderaufnahmemittel, vorzugsweise schwerkraftgetrieben, auf das Förderband übergebbar ist.

In einem Trennabschnitt kann der Abstand des Förderwegs des Hängeförderers und der Förderweg des Förderbands kontinuierlich grösser werden, sodass bei der Förderung eines Hängeförderaufnahmemittels entlang des Trennabschnitts das entleerte Hängeförderaufnahmemittel vom Förderband abgehoben wird und in die frei hängende Lage zurückschwenkt. Üblicherweise sind die Fördergeschwindigkeiten des Förderbandes und die des Hängeförderers gleich.

Das Förderband kann eine Mehrzahl von entlang einem Umfang des Förderbands gleichmässig beabstandet angeordneter, nach aussen gerichteter, transversaler Rippen aufweisen. Die relative Lage der Rippen und der Hängeförderaufnahmemittel ist typischerweise zueinander so gewählt, dass im Kontaktabschnitt eine Rippe zum Hängeförderaufnahmemittel aufholt, den Bodenabschnitt des Hängeförderaufnahmemittels kontaktiert und diesen in Förderrichtung nach vorne schiebt, bis das Hängeförderaufnahmemittel in einen Zustand zum Entleeren übergegangen ist. Im Kontaktabschnitt, in dem Bereich in dem die jeweilige Rippe den Bodenabschnitt des Hängeförderaufnahmemittels berührt, können der Hängeförderer und das Förderband mit gleicher Geschwindigkeit betreibbar sein. Insbesondere können der Hängeförderer und das Förderband konstant mit der gleichen Geschwindigkeit laufen.

Der Abstand der Rippen kann so gewählt sein, dass während der Förderung eines Hängeförderaufnahmemittels entlang des Übergabeabschnitts ein in dem Hängeförderaufnahmemittel vorhandenes Stückgut schwerkraftgetrieben aus der Tasche auf das Förderband gleitet und auf dem Förderband schwerkraftunterstützt weiter nach unten gleitet, bis dieses von der, dem Hängeförderaufnahmemittel vorauslaufenden, Rippe aufgefangen und gehalten wird. Die Rippen des Förderbandes können ebenfalls aus einer Vielzahl paralleler Finger bestehen.

Ein oberes Ende der Rutsche kann Schlitze aufweisen, deren Lage den Fingern der Rippen des Förderbandes entsprechen, so dass beim Umlenken des Förderbandes die Finger der Rippen und die Schlitze der Rutsche kämmend miteinander wechselwirken. Die hinter einer Rippe zurückgehaltenen Stückgüter können dann getaktet freigegeben werden und anschliessend auf der Rutsche schwerkraftgetrieben weiterbefördert werden. Ein weiterer Förderer kann die freigegebenen Stückguteinheiten von der Rutsche übernehmen.

Die vom Hängeförderer an der Abgabestation abgegebenen Stückgüter werden mittels der Anfördervorrichtung an die Übergabevorrichtung gefördert. Die Übergabevorrichtung kann hierzu angrenzend an die Abgabestation einen Anförderer aufweisen. Der Anförderer kann hierbei beispielsweise als ein Band-, oder Rollenförderer ausgeführt sein. Dieser kann dazu dienen die an der Abgabestation typischerweise aus den Hängeförderaufnahmemitteln des Hängeförderers abgegebenen Stückgüter an das Übergabeelement zu fördern. Insbesondere beim Entleeren und Zuführen mittels einer Rutsche, kommen die Stückgüter typischerweise nicht taktgenau und gleichmässig beabstandet an der Übergabevorrichtung an.

Der Anförderer kann hierzu im Stop-and-Go Betrieb betreibbar sein um das jeweilige Stückgut taktgenau an das Übergabeelement übergeben zu können. Das Übergabeelement kann typischerweise mindestens zwischen einer Aufnahmeposition zur Aufnahme eines angeförderten Stückguts und mindestens einer Abgabeposition zur Abgabe eines sich auf dem Übergabeelement befindlichen Stückguts verfahrbar, insbesondere horizontal verfahrbar, sein.

Der Anförderer kann alternativ oder in Ergänzung beschleunig oder abbremsbar sein, sodass das jeweilige von der Anfördervorrichtung angeförderte Stückgut bereits in der Aufnahmeposition derart taktsynchron an das Übergabeelement übergebbar ist, dass es in der Abgabeposition ebenfalls taktsynchron vom Übergabeelement an einen nachgelagerten Abförderer übergebbar ist. Dies kann insbesondere notwendig sein, wenn der Abförderer beispielsweise als Schalenförderer mit separaten Schalen ausgeführt ist. In diesem Fall müssen Stückgüter im Wesentlichen mittig an die jeweilige Schale übergeben werden um eine Herausfallen oder Verklemmen der Stückgüter zwischen zwei aufeinanderfolgende Schalen zu vermeiden.

Neben dem taktsynchronen Anfördern kann es notwendig sein, die Stückgüter nicht nur entlang einer Förderrichtung zueinander zu beabstanden und taktsynchron auszurichten, sondern diese auch in ihrer Orientierung parallel zur Förderrichtung auszurichten oder bereits mittig auf das Übergabeelement zu übergeben. Die Übergabevorrichtung kann hierzu ein Ausrichtungsmodul umfassen, welches angetriebene Ausrichtungselemente umfasst, mittels derer das Stückgut entlang und/oder seitlich bezüglich einer Förderrichtung ausrichtbar ist. Da insbesondere bei Anfördervorrichtungen die eine Rutsche zum Weiterleiten des Stückguts von der Abgabestation an den Anförderer oder das Übergabeelement umfassen die Stückgüter nicht ausgerichtet übergeben werden, kann das Ausrichtungsmodul vorzugsweise stromaufwärts vor dem Anförderer angeordnet sein, um die Ausrichtung auf eine Sollausrichtung zu bringen.

Die Ausrichtungselemente können in Form von Rollen, Allseitenrädern oder Kugeln ausgeführt sein. Kugeln bieten im Vergleich zu Rollen oder Allseitenrädern eine höhere Beweglichkeit und Flexibilität in einer Fördersystemanwendung. Sie können sich in alle Richtungen frei drehen, was eine nahezu reibungslose Fahrt durch enge Kurven und um Hindernisse wie zum Beispiel andere Stückgüter ermöglicht. Darüber hinaus können Kugeln das Gewicht gleichmässiger verteilen als Rollen oder Räder, was zu einer geringeren Abnutzung des Fördersystems führt. Dies kann wiederum zu einer längeren Lebensdauer des Fördersystems und geringeren Wartungskosten führen.

In der Regel weisst jedes Ausrichtungsmodul eine Mehrzahl an Ausrichtungselementen auf. Diese können einzeln und unabhängig voneinander angetrieben werden, um ein Stückgut beim Fördern auf dem Ausrichtungsmodul entlang der Förderrichtung und/oder seitlich hierzu auszurichten. Um eine zufällige Ausrichtung eines angeförderten Stückguts in eine Sollausrichtung zu überführen, kann oberhalb des Ausrichtungsmoduls eine Sensoreinheit angeordnet sein, mittels der eine Ausrichtung des Stückguts auf dem Ausrichtungsmodul detektierbar ist.

Basierend auf einem von der Sensoreinheit gemessenen und an eine Steuereinrichtung gesendeten Sensorsignals, kann mittels der Steuereinrichtung das Stückgut durch ein aktives und gerichtetes Antreiben der Ausrichtungselemente auf dem Ausrichtungsmodul ausgerichtet werden und/oder zu einem stromaufwärts oder stromabwärts angeordneten Stückgut beabstandet werden. Das Stückgut wird dann vorzugsweise ausgerichtet und beabstandet an den Anförderer übergeben und von diesem taktsynchron an das Übergabeelement übergeben.

Das Übergabeelement kann derart ausgebildet und beschleunigt bewegbar sein, sodass das darauf aufgenommene Stückgut aufgrund dessen Trägheit in der Horizontalen im Wesentlichen unbewegt, schwerkraftgetrieben auf den Zusammenstellplatz übergebbar ist. Durch eine beschleunigte, typischerweise ruckartige Bewegung, kann das Übergabeelement unter dem darauf liegenden Stückgut entfernt werden. Aufgrund dessen Masse und der daraus resultierenden Trägheit, verharrt bei einer ruckartigen Bewegung das Stückgut temporär nahezu unverändert, bevor es aufgrund der Schwerkraft herabfällt.

Das horizontal verfahrbare Übergabeelement der Übergabevorrichtung kann beispielsweise mindestens teilweise plattenförmig oder als Platte ausgeführt sein, die optional in seitlichen Führungen beweglich gelagert ist oder als drehbare Platte ausgeführt ist, welche zur Übergabe des Stückguts vorzugsweise unterhalb des Anförderers, verdrehbar gelagert ist. Die Platte kann dabei als eigenstabile oder als labile und geführte Platte ausgeführt sein. Die Platte weist typischerweise einen Reibungskoeffizienten auf, der bei einer abrupten Beschleunigung der Platte ein Gleiten des Stückguts aufgrund dessen Trägheit auf der Platte zulässt.

Gute Resultate können erzielt werden, wenn die Platte mindestens teilweise aus einem Kunststoff hergestellt ist oder zumindest bereichsweise mit einem Kunststoff mit guten Gleiteigenschaften beschichtet ist. Ein Haft-Reibungskoeffizent µ_{H} zwischen dem Stückgut auf dem Übergabeelement ist bspw. kleiner gleich 0,5, bevorzugt kleiner gleich 0,25. Typische Materialien hierfür können Baumwollhartgewebe auf Phenol oder Epoxidharzbasis. Alternativ können auch Polyamid (PA), Polyterafluorethylen (PTFE), Polyterafluorethylen (PE) oder Polyesterterephtalat (PET) verwendet werden.

Alternativ kann das horizontal verfahrbare Übergabeelement der Übergabevorrichtung auch als Bandförderer mit einem verfahrbaren Bandabschnitt ausgeführt sein, vorzugsweise in Form eines Teleskopförderbandes. Zum Abgeben des jeweiligen Stückguts kann der verfahrbare Bandabschnitt derart beschleunigt verfahren werden, dass dieser unterhalb des Stückguts aufgrund dessen Trägheit zurückgezogen wird und das Stückgut hierdurch schwerkraftgetrieben übergebbar ist.

Neben einem reinen vor- und zurückbewegen zwischen der Aufnahme- und der Abgabeposition, kann das Übergabeelement auch inkrementell verfahrbar sein. Dies ermöglicht es, dass neben dem reinen Ansteuern der Aufnahmeposition und der Abgabeposition auch jede beliebige Position dazwischen gezielt ansteuerbar ist. Das Übergabeelement kann horizontal inkrementell verfahrbar sein, sodass das Stückgut positioniert auf den Zusammenstellplatz übergebbar ist, vorzugsweise mittig, aussermittig oder mit weiteren Stückgütern gestapelt, nebeneinander gestapelt oder überlappend. Hierdurch wird es ermöglicht, dass mit der Übergabevorrichtung sowohl ein vereinzeltes und taktsynchrones Übergeben auf den Zusammenstellplatz möglich ist, beispielsweise ein mittiges Übergeben eines Stückguts in eine Transportschale eines Schalenförderers. Zudem ist es möglich ein gestapeltes Übergeben zu realisieren während sich das Förderorgan des Abförderers weiterbewegt, insbesondere kontinuierlich weiterbewegt.

Alternativ kann aber auch das Bereitstellen mehrerer Stückgüter auf einen Zusammenstellplatz in einer gestapelten Art und Weise ermöglicht werden. So können mehrere Stückgüter auf einen Stapel innerhalb eines Zusammenstellplatzes übergeben werden, mehrere Stückgüter auf mehrere Stapel innerhalb eines Zusammenstellplatzes oder mehrere Stückgüter zueinander versetzt und zumindest teilweise überlappend bereitgestellt werden.

Ein besonders platzsparender Aufbau kann erzielt werden, wenn das Übergabeelement unterhalb des Anföderers angeordnet ist und horizontal bezüglich eines distalen Endes des Anförderers verfahrbar ist. Das Übergabeelement, beispielsweise in Form einer Platte oder eines Teleskopförderbandes wie obenstehend näher erläutert, sowie der Antrieb des Übergabeelements können unterhalb des Anförderers angeordnet sein, was eine besonders kompakte und in der Horizontalen besonders kurze Übergabevorrichtung ermöglicht.

In der Aufnahmeposition kann das Übergabeelement bezüglich eines distalen Endes des Anförderers hervorstehend angeordnet sein, um einen Übergabebereich zumindest teilweise zu verschliessen. Dieser Übergabebereich kann als Fenster oder als physisch ausgeformter Schacht, beispielsweis in Form eines Trichters ausgeführt sein. In der Abgabeposition kann das Übergabeelement derart unter den Anföderer zurückgezogen sein, um den Übergabebereich freizugeben. Der Übergabebereich kann durch das distale Ende des Anförderers, sowie durch einen hierzu beabstandet angeordneten Anschlag begrenzt werden. Der Anschlag begrenzt somit den Übergabebereich und stellt sicher, dass ein durch den Übergabebereich auf den Zusammenstellplatz zu übergebendes Stückgut auch auf dem Zusammenstellplatz zu liegen kommt.

Der Zusammenstellplatz ist typischerweise auf dem Abförderer angeordnet, sodass eine darauf gebildete Kommissioniergruppe mittels des Abförderers abförderbar ist. Unter Kommissioniergruppe ist in der vorliegenden Offenbarung sowohl eine geordnete als auch eine ungeordnete Ansammlung von Stückgütern zu verstehen. So können sowohl ein oder mehrere Stapel als auch ein Haufen oder eine überlappende Anordnung von sequentiell aufeinander abgelegten Stückgütern als Kommissioniergruppe verstanden werden. Je nach nachgelagerter Anlage kann der Abförderer als Band-, Rollen- oder Schalenförderer ausgebildet sein. Der Zusammenstellplatz kann in Form eines virtuellen Zusammenstellplatzes ausgeführt sein oder als ein physischer Rahmen, der auf dem Abförderer angeordnet ist. Alternativ kann der Zusammenstellplatz auch innerhalb eines Aufnahmebehältnisses angeordnet sein, das auf dem Abförderer angeordnet ist. Das Aufnahmebehältnis kann als Kiste, Karton, Tablett, Wanne ausgeführt sein. Alternativ kann auch ein Rahmen, beispielsweise ein U-förmiger Rahmen verwendet werden.

Um ein möglichst effizientes Verpacken zu erreichen, wobei die Anzahl an Arbeitsschritten klein gehalten wird und gleichzeitig möglichst kleine Pakete erzielt werden, was Volumen und somit Versandkosten spart, könne die Pakete direkt um die Kommissioniergruppe herum gebildet werden. Hierbei wird die Kommissioniergruppe auf einen flachen Karton abgeben, welcher nach dem Vermessen der Kommissioniergruppe passend eingeschnitten und um die Kommissioniergruppe herum gefaltet und dann verklebt wird. Um ein nochmaliges Übergeben zu vermeiden, kann die Kommissioniergruppe direkt auf einem plattenförmigen Stück Karton gebildet werden, welcher auf dem Abförderer bereitgestellt wird.

Als Ausgangsmaterial für die Verpackung können Folien, Taschen, oder bevorzugt rechteckige oder quadratische flache Kartonbahnen bereitgestellt werden. Alternativ kann auch ein Endlosband Karton auf dem Abförderer bereitgestellt werden. Um die Kommissioniergruppe kann eine Verpackung in Form einer Versandtasche, einer Wicklung aus Folie oder ein Karton herumgebildet werden. Die Kommissioniergruppen können mittels des Übergabeelements auf die Kartonbahn übergeben werden. Um die auf dem Zusammenstellplatz mittels des Übergabeelements zusammengestellte Kommissioniergruppe kann anschliessend eine Verpackung herumgebildet werden, vorzugsweise in Form eines Kartons der um die Kommissioniergruppe herumgefaltet wird. Hierbei ist nicht einfach ein Verpacken in einen Karton zu verstehen, sondern das Bilden eines Kartons in Form eines Pakets. Hierbei kann basierend auf den erfassten Abmessungen, Länge, Breite und Höhe ein Pakete durch maschinelles Einschneiden, Falten und Verkleben des flächigen Ausgangsmaterials gebildet werden. Beim Versand können vor dem Bilden der Verpackung in einem weiteren Schritt der Kommissioniergruppe zusätzliche Beilagen beigelegt werden. Beispielsweise in Form von Lieferscheinen, Rechnungen, Prospekten oder Werbematerialien. Auf die Verpackung können für den Versand wichtige Informationen, beispielsweise in Form von Versandetiketten angebracht werden.

An dem distalen Ende des Anförderers kann eine Sensoreinheit angeordnet sein, mittels dessen das Eintreffen eines vom Anförderer angeförderten Stückguts detektierbar ist und basierend auf einem von der Sensoreinheit gemessenen und an eine Steuereinrichtung gesendeten ersten Sensorsignals, kann mittels der Steuereinrichtung das Übergabeelement von der Abgabeposition in die Aufnahmeposition verfahrbar sein, um das angeförderte und vom Sensor detektierte Stückgut aufzunehmen. Die Aufnahmeposition kann auch beweglich sein, so kann das Übergabeelement mit dem Anförderer gemeinsam bewegt werden, um die Übergabe auf das Übergabeelement zu verbessern. Dies kann insbesondere bei lose verpackten Stückgütern, wie etwa Bekleidung relevant sein.

Die Sensoreinheit kann hierbei das taktsynchrone Übergeben gewährleisten, indem basierend auf dem Sensorsignal durch die Steuereinrichtung entweder der Verfahrweg des Übergabeelementes und/oder die Beschleunigung des Übergabeelementes steuerbar ist. Falls beispielsweise ein mittiges Übergeben auf einen vorbeibewegten Zusammenstellplatz erwünscht ist, kann aufgrund des ersten Sensorsignals die Steuereinrichtung das Übergabeelement derart justieren, sodass das mittige Übergeben gewährleistet wird.

Neben dem Detektieren des Eintreffens des jeweiligen Stückguts mittels der Sensoreinheit, kann mittels der Steuereinrichtung ferner der Vorbeitransport des vom Anförderers angeförderten Stückguts überwachbar sein. Beim Verlassen des Sensorbereichs der Sensoreinheit kann von der Sensoreinheit ein zweites Sensorsignal an die Steuereinrichtung gesendet werden und basierend auf dem zweiten Sensorsignal durch die Steuereinrichtung das Übergabeelement von der Aufnahmeposition zurück in die Abgabeposition verfahrbar sein, um das aufgenommene Stückgut schwerkraftgetrieben auf den Zusammenstellplatz zu übergeben.

Die Übergabevorrichtung kann einen Übergabebereich definieren, wobei das Übergabeelement den Übergabebereich zumindest teilweise verschliesst und auf das Übergabeelement ein vom Anförderer angefördertes Stückgut aufnehmbar ist. Mittels der Bewegung ausgehend von der Abgabeposition kann das Übergabeelement den Übergabebereich zumindest derart freigeben, sodass ein darauf aufgenommenes Stückgut schwerkraftgetrieben durch den Übergabebereich hindurch auf den Zusammenstellplatz übergebbar ist. Die Übergabevorrichtung kann eine Erkennungsseinrichtung umfassen, mittels derer in einer Draufsicht der Grundriss der Kommissioniergruppe und/oder in einer Seitenansicht der Umriss oder die Höhe der Kommissioniergruppe überwachbar ist.

Vorzugsweise wird mittels dieser Erkennungsseinrichtung der Übergabebereich überwacht. Zur Begrenzung kann die Übergabevorrichtung einen Anschlag zur Positionierung der Stückgüter umfassen, wobei der Übergabebereich typischerweise von dem Anschlag und dem distalen Ende des Anförderers begrenzt wird, durch welches hindurch das Stückgut schwerkraftgetrieben auf den Zusammenstellplatz übergebbar ist.

Die Kommissionieranlage kann Teil einer Logistikanlage sein. Die Logistikanlage umfasst neben der Kommissionieranlage typischerweise noch eine Lagervorrichtung und/oder eine Sortiervorrichtung und/oder eine Speichervorrichtung. Typischerweise werden die Stückgüter eingangsseitig der Logistikanlage angeliefert, beispielsweise mittels eines LKWs. Nach dem Entladen werden die Stückgüter typischerweise durch die folgenden Bereiche der Logistikanlage transportiert: Anlieferung, Wareneingang, Lager, Verpacken und Etikettieren, Puffern, Speichern, Sortieren, Verteilen, Verpacken, Abtransport, welcher ebenfalls typischerweise wieder per LKW erfolgt.

Zum Transport der Waren von Aufgabeplätzen durch die Logistikanlage können diese mittels Hängeförderaufnahmemittelen transportiert werden. Zum Befüllen der Hängeförderaufnahmemittel kann die Logistikanlage eine Vorrichtung zum Befüllen der Hängeförderaufnahmemittel aufweisen. Die Hängeförderaufnahmemittel sind im unbefüllten Zustand bereits an dem Hängeförderer mittels Laufwagen in einer Wartestellung angeordnet. Die Laufwagen sind hierbei an einer Laufschiene in Laufschienenrichtung beweglich gelagert und die Hängeförderaufnahmemittel jeweils nach unten hängend zur Aufnahme von Stückgutgut am Laufwagen angeordnet.

Das Hängeförderaufnahmemittel kann dabei während des Transports in der Befüllvorrichtung an einem Laufschienenstück hängend transportiert werden, welches einem Abschnitt der Laufschiene entspricht und welches wahlweise an ein Ende der ersten Laufschiene bzw. der zweiten Laufschiene anschliessbar ist. In der Befüllvorrichtung werden die Hängeförderaufnahmemittel zum Befüllen typischerweise gedreht. Hierzu ist vorteilhaft eine Wirkanordnung vorgesehen, mit welcher die Transportelemente an einer bestimmten Stelle des Förderwegs um einen bestimmten Drehwinkel gedreht werden können, wobei typischerweise ein Aufhängehaken an der Aufhängung der Hängeförderaufnahmemittel von der ersten Position in eine zweite Position beziehungsweise von der zweiten Position in die erste Position überführbar ist. Dabei erfolgt vorteilhaft die Umlagerung der Hängeförderaufnahmemittel durch das Drehen der Hängeförderaufnahmemittel selber, vorteilhaft um eine Mittelachse erfolgen. Besonders vorteilhaft sind als Wirkanordnung eine Bürstenanordnung oder mechanische, elektrische, magnetische oder pneumatische Betätigungsmittel vorgesehen.

In einer alternativen Befüllvorrichtung werden in einem Transferbereich mittels eines Vereinzelungsmechanismus, beispielsweise mittels einer Förderschnecke, die Hängeförderaufnahmemittel vereinzelt. Mittels einer Zufördereinrichtung, die typischerweise mehrere hintereinander angeordnete Fördereinheiten mit jeweils einem Förderband umfasst, werden die aufzugebenden Stückgüter zugefördert. Die Zufördereinrichtung kann im Transferbereich eine abschliessende Fördereinheit in Form einer Rollenbahn aufweisen, über welche das Stückgut abrollen und von oben in die Hängeförderaufnahmemittel gleiten bzw. rutschen kann.

Bei der Befüllung wird jeweils ein einzelnes Hängeförderaufnahmemittel entlang einer zuführenden Förderstrecke in Förderrichtung mit dem in Förderrichtung vorlaufenden Aufnahmefach in den Transferbereich bewegt. Das Hängeförderaufnahmemittel wird vor oder im Transferbereich mittels eines Öffnungsmechanismus aktiv geöffnet. Das Hängeförderaufnahmemittel liegt im Transferbereich typischerweise mit einer ersten Seite an der abschliessenden Fördereinheit der Zufördereinrichtung an, welche folglich eine Auflage ausbildet. Sobald das Hängeförderaufnahmemittel den Transferbereich erreicht hat, wird die Förderung des Hängeförderaufnahmemittels zwecks Transfer eines Stückguts angehalten. Das Hängeförderaufnahmemittel befindet sich folglich beim Transfer des Stückguts in dem Hängeförderaufnahmemittel nicht in einer Förderbewegung.

Über die Zufördereinrichtung wird ein der Förderfläche der Fördereinheiten aufliegendes Stückgut dem Transferbereich zugefördert. Das Stückgut gleitet über die Rollenbahn der abschliessenden Fördereinheit in einer Transferrichtung durch die Aufnahmeöffnung in das Hängeförderaufnahmemittel hinein. Nach dem Transfer des Stückguts in das Hängeförderaufnahmemittel wird dieses mit dem Stückgut mittels des Mitnahmeförderers aus der horizontalen Förderung aus dem Transferbereich herausbewegt. Das Hängeförderaufnahmemittel rollt bei diesem Vorgang mit einer Seite auf der Rollenbahn der abschliessenden Fördereinheit ab.

Die abschliessende Fördereinheit mit der Rollenbahn kann zur Freigabe des Förderweges für die mit dem Stückgut beschickten Hängeförderaufnahmemittel aus seiner Förderposition weggeschwenkt werden. Sobald das mit dem Stückgut beschickte Hängeförderaufnahmemittel nach oben aus dem Transferbereich weggefördert ist, kann ein nachfolgendes Hängeförderaufnahmemittel in den Transferbereich gefördert werden.

Zum Speichern und Sortieren der Stückgüter innerhalb der Logistikanlage kann weiterhin ein Batchpuffer zur Bereitstellung von Warengruppen vorgesehen werden. Diese Warengruppen können in Form von Batches bereitgestellt werden. Weiterhin kann die Logistikanlage einen oder mehrere Matrix- Sortierer zum batchweisen Sortieren der Waren umfassen. Eine Mehrzahl von Hängeförderaufnahmemitteln, welche jeweils eine Aufnahmeeinheit, vorzugsweise in Form eines Hängeförderaufnahmemittels umfassen, können zur Sortierung der Waren einem Matrix-Sortierer zugeführt werden. Ein Matrix-Sortierer kann hierbei auch mehrere Sortierstufen aufweisen.

Falls der Matrix-Sortierer innerhalb der Logistikanlage stromabwärts des Batchpuffers und/oder der Befüllvorrichtung angeordnet ist, kann dieser die bereits befüllten Hängeförderaufnahmemittel des Batchpuffers und/oder von der Befüllvorrichtung übernehmen. Der Matrix-Sortierer umfasst typischerweise mindestens einen Umlaufförderer zum Fördern der Hängeförderaufnahmemittel, sowie davon abgehende Stiche zum Sortieren der Hängeförderaufnahmemittel, wobei die Logistikanlage eine Steuerung aufweist, welche ausgelegt ist, die Fördergeschwindigkeit des Umlaufförderers zu steuern.

Der Batchpuffer kann ebenfalls Stiche aufweisen, welche von einem weiteren Förderer, vorzugsweise einem Umlaufförderer abgezweigt werden. Der Umlaufförderer ist üblicherweise dazu ausgelegt, die Hängeförderaufnahmemittel mit einer konstanten Fördergeschwindigkeit zu fördern. Die Steuerung kann dazu ausgelegt sein, die Fördergeschwindigkeit des Umlaufförderers derart zu steuern, dass die Fördergeschwindigkeit des Umlaufförderers in mindestens einem Batch höher als die konstante Fördergeschwindigkeit der weiteren Förderer ist.

Der Umlaufförderer ist typischerweise dazu ausgelegt, die Hängeförderaufnahmemittel in einer Sortierstufe zu- und/oder von einer Sortierstufe wegzuführen. Eine Sortierstufe des Matrix-Sortierers kann eine Mehrzahl von linearen Pufferstrecken aufweisen, welche durch Weichen mit dem Umlaufförderer verbunden sind. Die Pufferstrecken sind vorzugsweise als Stiche ausgeführt und können als Gravitationsstrecken mit einem Gefälle derart ausgebildet sein, dass die Hängeförderaufnahmemittel in den Gravitationsstrecken schwerkraftbedingt förderbar sind. Der Batchpuffer kann zudem eine Mehrzahl von Stichen in Form von linearen Speicherstrecken aufweisen, in welche vorzugsweise jeweils ein Batch oder mehrere Batches einspeicherbar sind.

Vor dem Matrix-Sortierer kann mindestens eine Messvorrichtung angeordnet sein, welche ausgebildet ist, die Parameter, vorzugsweise das Gewicht und/oder die Grösse, der in den Matrix-Sortierer einfahrenden Hängeförderaufnahmemittel und/oder Waren zu ermitteln und der Steuerung zu übermitteln.

Die Logistikanlage kann eine Datenbank aufweisen, in welcher die Parameter, vorzugsweise das Gewicht und/oder die Grösse, der in den Matrix-Sortierer einfahrenden Hängeförderaufnahmemittel und/oder Waren, hinterlegt sind. Der Matrix-Sortierer kann eine Mehrzahl von Sortierstufen und eine Mehrzahl von Sortierstichen umfassen, welche jeweils einer Sortierstufe oder zwei Sortierstufen zugeordnet sind. Die Steuerung ist typischerweise derart ausgelegt, die Fördergeschwindigkeit jedes Matrixförderers individuell zu steuern.

Neben dem Matrix Sortierer, kann die Logistikanlage auch einen Zwischenspeicher umfassen. Dieser ist üblicherweise vor oder nach dem Batchpuffer angeordnet. Der wenigstens eine Zwischenspeicher weist typischerweise einen dynamischen Speicher zur Zwischenspeicherung der für die Kommissionierung bereitgestellten Waren/Stückgüter und einen dem dynamischen Speicher nachgeschalteten Abrufspeicher zum Speichern von aus dem dynamischen Speicher ausgespeicherten und dabei vorsortierten Waren auf. Der dynamische Speicher und der Abrufspeicher können innerhalb eines gemeinsamen Umlaufförderers angeordnet sein und über den gemeinsamen Umlaufförderer miteinander in Verbindung stehen.

Der Umlaufförderer ist typischerweise ein Förderer, mit welchem die Waren in einem geschlossenen Umlauf bzw. Kreislauf gefördert werden können. An verschiedenen Stellen des Umlaufförderers können dabei betätigbare oder schaltbare Weichen vorgesehen werden. Die Weichen ermöglichen ein gezieltes Einfahren von neuen Waren in den Umlauf bzw. ein Ausfahren von im Umlauf zirkulierenden Waren. Die Waren sind dabei in den Hängeförderaufnahmemitteln, vorzugsweise in Form von Hängefördertaschen unterteilt, die jeweils für sich bewegt und dem Umlauf zugefügt bzw. dem Umlauf entnommen werden können.

Die im Umlauf zirkulierenden und im dynamischen Speicher abgelegten Waren liegen in einer bestimmten Reihenfolge vor, die sich meist nach dem zeitlich gestaffelten Ausspeichern der Waren aus dem Warenlager richtet, nicht jedoch den durch die Aufträge bestimmten Warenzusammenstellungen ("Batches") entspricht. Durch eine Vorsortierung der Waren im Abrufspeicher werden die Waren bereits in einer den Aufträgen entsprechenden Zusammenstellung zusammengefasst, sodass ein nachfolgender Matrixsortierer oder eine Kommissionieranlage von Sortierungsarbeit entlastet und entsprechend kleiner dimensioniert oder ganz eingespart werden kann.

Anschliessend werden die Stückgüter zur Verpackung an die erfindungsgemässe Kommissionieranlage übergeben. Ein erfindungsgemässes Verfahren zum Transport und dem Bereitstellen von Stückgütern umfasst mindestens die folgenden Verfahrensschritte:
- Bereitstellen einer erfindungsgemässen Kommissionieranlage, umfassend eine Anfördervorrichtung umfassend einen Hängeförderer, eine Abgabestation, sowie einer Übergabevorrichtung mit einem horizontal verfahrbaren Übergabeelement;
- Anfördern der Stückgüter mittels des Hängeförderers und Abgeben der Stückgüter vom Hängeförderer an die Übergabevorrichtung mittels der Abgabestation;
- Übergeben der angeförderten Stückgüter mittels der Übergabevorrichtung und Zusammenstellen auf einem Zusammenstellplatz.

Die Übergabevorrichtung kann angrenzend an die Abgabestation der Anfördervorrichtung einen Anförderer aufweisen und das Übergabeelement zum Zusammenstellen zwischen einer Aufnahmeposition zur Aufnahme eines Stückguts und einer Abgabeposition zur Abgabe des Stückguts horizontal verfahren werden.

Mittels eines angetriebenen Ausrichtungselementes eines Ausrichtungsmoduls kann das Stückgut entlang und/oder seitlich bezüglich einer Förderrichtung ausgerichtet werden und/oder zu einem stromaufwärts oder stromabwärts angeordneten Stückgut beabstandet werden.

Das Übergabeelement kann zum Zusammenstellen zeitgleich zum Anfördern horizontal bezüglich eines distalen Endes des Anförderers verfahren werden, um ein vom Anförderer angefördertes Stückgut vom Anförderer zu übernehmen.

Das Übergabeelement kann zum Zusammenstellen des sich bereits auf dem Übergabeelement befindlichen Stückguts bezüglich des distalen Endes des Anförderers zurückgefahren werden, sodass das Stückgut schwerkraftgetrieben durch den Übergabebereich auf den Zusammenstellplatz übergeben wird.

Das Übergabeelement wird vorzugsweise beschleunigt, besonders bevorzugt ruckartig zurückgefahren, sodass das darauf aufgenommene Stückgut aufgrund dessen Trägheit in der Horizontalen im Wesentlichen unbewegt, anschliessend schwerkraftgetrieben auf den Zusammenstellplatz herabfällt.

Das Übergabeelement zum Zusammenstellen des Anförderers derart verfahren wird, sodass
- das Stückgut im Wesentlichen mittig auf den Zusammenstellplatz zum Bilden einer Kommissioniergruppe übergeben wird, oder
- das Stückgut aussermittig auf den Zusammenstellplatz zum Bilden mehrerer Kommissioniergruppen auf den Zusammenstellplatz übergeben wird, oder
- das Übergabeelement inkrementell weiterbewegt wird, sodass ein nachfolgendes Stückgut überlappend auf den Zusammenstellplatz auf ein vorangegangenes Stückgut übergeben wird.

### DARSTELLUNG DER FIGUREN

Anhand der in den nachfolgenden Figuren gezeigten Ausführungsbeispiele und der dazugehörigen Beschreibung werden Aspekte der Erfindung näher erläutert. Es zeigen:
- Fig. 1: ein erstes Ausführungsbeispiel der Kommissionieranlage beim Bilden von Kommissioniergruppen;
- Fig. 2: das erste Ausführungsbeispiel der Kommissionieranlage beim Bilden von Kommissioniergruppen in Form von Stapeln;
- Fig. 3: ein zweites Ausführungsbeispiel der Kommissionieranlage mit einem Ausrichtungsmodul beim Bilden von Kommissioniergruppen;
- Fig. 4: ein drittes Ausführungsbeispiel der Kommissionieranlage beim Übergeben eines ersten Stückguts an einen Zusammenstellplatz;
- Fig. 5: das dritte Ausführungsbeispiel der Kommissionieranlage beim Übergeben des ersten Stückguts und zeitgleichen Anliefern eines weiteren Stückguts;
- Fig. 6: das dritte Ausführungsbeispiel der Kommissionieranlage beim Übergeben des weiteren Stückguts auf das erste Stückgut zum Bilden eines Stapels;
- Fig. 7: zeigt eine Ausführungsvariante des Ausrichtungsmoduls zum ausrichten des Stückguts, in Fig. 7a und 7b ein Ausrichten, in Fig. 7c ein Beabstanden und in Fig. 7d ein Drehen;
- Fig. 8: ein Ablaufdiagramm einer Logistikanlage welche eine Kommissionieranlage umfasst.

### BESCHREIBUNG DER AUSFÜHRUNGSBEISPIELE

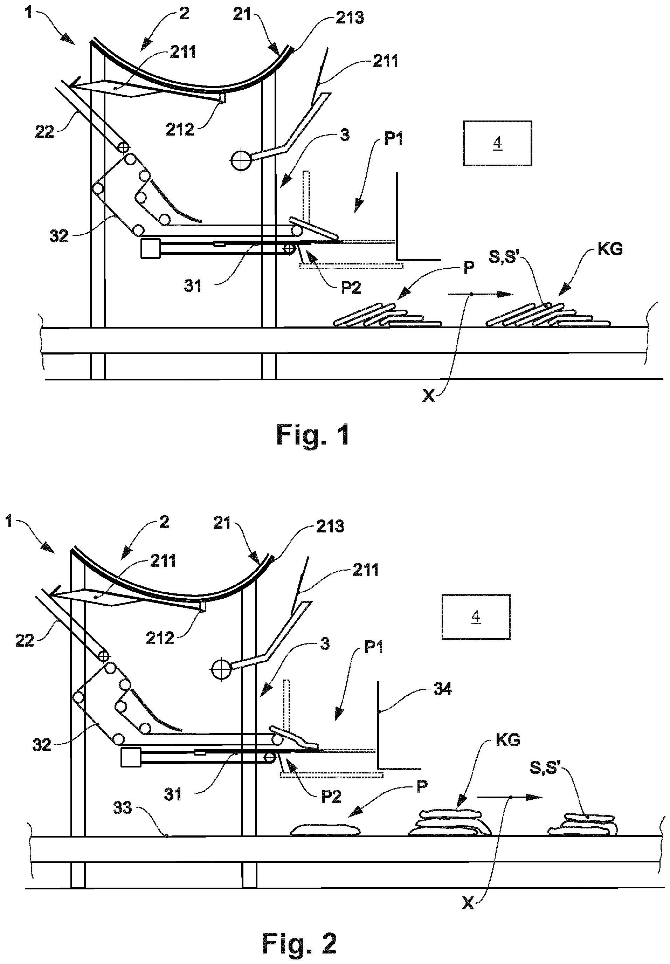

**Figur 1** zeigt ein erstes Ausführungsbeispiel der Kommissionieranlage 1 beim Bilden von Kommissioniergruppen KG. Die abgebildete Kommissionieranlage 1 zum Transport und dem Bereitstellen von Stückgütern S, S' umfasst eine Anfördervorrichtung 2, die einen Hängeförderer 21 zum Anfördern der Stückgüter S, S' umfasst. Der abgebildete Hängeförderer 21 umfasst Hängeförderaufnahmemittel 211 in Form von Hängefördertaschen, mittels derer die Stückgüter S, S' hängend förderbar sind. Die Hängefördertaschen 211 sind mittels Laufwagen 212 an einer Schiene 213 des Hängeförderers 21 geführt. Zum Entleeren der Hängefördertaschen 211 werden diese wie gezeigt verschwenkt.

Angrenzend an den Hängeförderer 21 weist die abgebildete Anfördervorrichtung 2 eine Abgabestation 22 zum Abgeben der Stückgüter S, S' vom Hängeförderer 2.1 an eine Übergabevorrichtung 3 auf. Zum Zusammenstellen der angeförderten Stückgüter S, S' weist die Übergabevorrichtung 3 ein horizontal verfahrbares Übergabeelement 31 auf, mittels dem die Stückgüter S, S' auf einen Zusammenstellplatz P schwerkraftgetrieben zusammenstellbar sind. Die Übergabevorrichtung 3 ist angrenzend an die Abgabestation 22 der Anfördervorrichtung 2 angeordnet und weist einen Anförderer 32 auf. Das Übergabeelement 31 kann zum Übergeben mindestens zwischen einer Aufnahmeposition P1 zur Aufnahme eines angeförderten Stückguts S und mindestens einer Abgabeposition P2 zur Abgabe eines sich auf dem Übergabeelement 31 befindlichen Stückguts S horizontal verfahrbar sein.

Das Übergabeelement 31 wird in der gezeigten Ausführungsform bei der Übergabe eines weiteren Stückguts S horizontal in der Abgabeposition P2 inkrementell weiter verfahren, sodass das Stückgut S positioniert auf den Zusammenstellplatz P übergeben wird. In der gezeigten Ausführungsform derart, dass die Stückgüter S, S' überlappend übergeben werden. **Figur 2** zeigt das zweite Ausführungsbeispiel der Kommissionieranlage 1 beim Bilden von Kommissioniergruppen KG in Form von Stapeln. Hierzu werden mehrere Stückgüter S, S' nacheinander im Wesentlichen mittig auf den Zusammenstellplatz P übergeben. Die Stückgüter S, S' werden hierzu allesamt aufeinander positioniert.

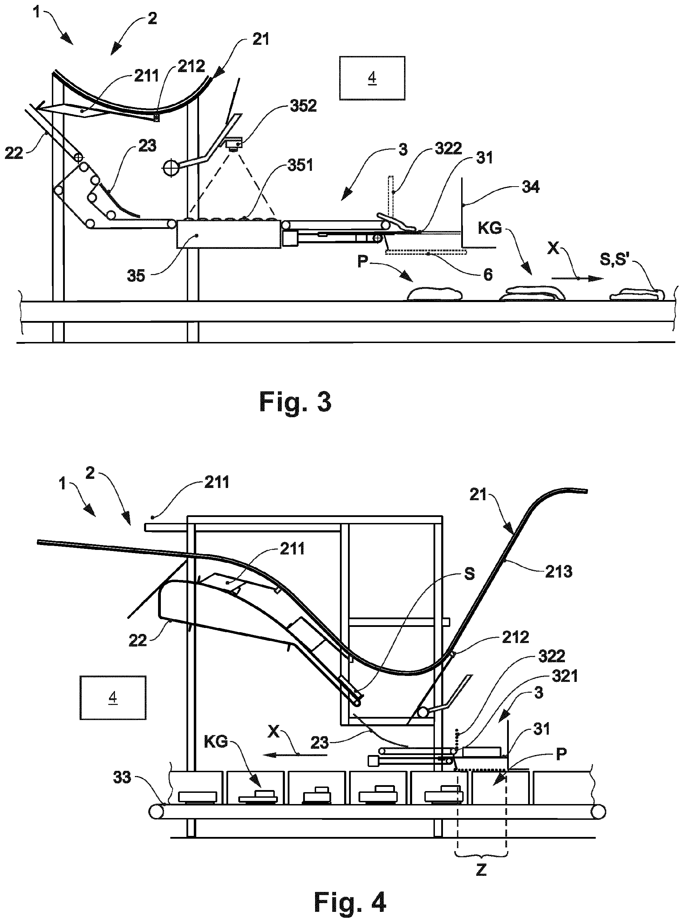

**Figur 3** zeigt ein zweites Ausführungsbeispiel der Kommissionieranlage 1 mit einem Ausrichtungsmodul 35 beim Bilden von Kommissioniergruppen KG. Die gezeigte Ausführungsform der Kommissionieranlage 1 umfasst ebenfalls eine Anfördervorrichtung, 2 umfassend einen Hängeförderer 21 zum Anfördern der Stückgüter S, S' sowie eine Abgabestation 22 zum Abgeben der Stückgüter S, S' vom Hängeförderer 21 an eine Übergabevorrichtung 3 zum Zusammenstellen der angeförderten Stückgüter S, S' welche Übergabevorrichtung 3 ein horizontal verfahrbares Übergabeelement 31 aufweist, mittels dem die Stückgüter S, S' auf einen Zusammenstellplatz P schwerkraftgetrieben zusammenstellbar sind.

**Figuren 4** bis **6** zeigen ein drittes Ausführungsbeispiel der Kommissionieranlage 1. Die gezeigte Ausführungsform der Kommissionieranlage 1 umfasst ebenfalls eine Anfördervorrichtung 2, umfassend einen Hängeförderer 21 zum Anfördern der Stückgüter S, S' sowie eine Abgabestation 22 zum Abgeben der Stückgüter S, S' vom Hängeförderer 2.1 an eine Übergabevorrichtung 3 zum Zusammenstellen der angeförderten Stückgüter S, S' welche Übergabevorrichtung 3 ein horizontal verfahrbares Übergabeelement 31 aufweist, mittels dem die Stückgüter S, S' auf einen Zusammenstellplatz P schwerkraftgetrieben zusammenstellbar sind. Zur Übergabe der Stückgüter S, S' von der Abgabestation 22 an den Anförderer 32 ist in diesem Ausführungsbeispiel eine Rutsche 23 vorgesehen.

Das abgebildete Übergabeelement 31 ist unterhalb des Anföderers 32 angeordnet und horizontal bezüglich eines distalen Endes 321 des Anförderers 32 verfahrbar. In der gezeigten Aufnahmeposition P1 ist das Übergabeelement 31 bezüglich des distalen Endes 321 hervorstehend angeordnet, um den Übergabebereich Z zumindest teilweise zu verschliessen. An dem distalen Ende 321 des Anförderers 32 ist eine Sensoreinheit 322 angeordnet, mittels der das Eintreffen eines des vom Anförderer 32 angeförderten Stückguts S detektierbar ist und basierend auf einem von der Sensoreinheit 322 gemessenen und an eine Steuereinrichtung 4 gesendeten ersten Sensorsignals, mittels der Steuereinrichtung 4 das Übergabeelement 31 von der Abgabeposition P2 in die Aufnahmeposition P1 verfahrbar ist, um das angeförderte und von der Sensoreinheit 322 detektierte Stückgut S aufzunehmen.

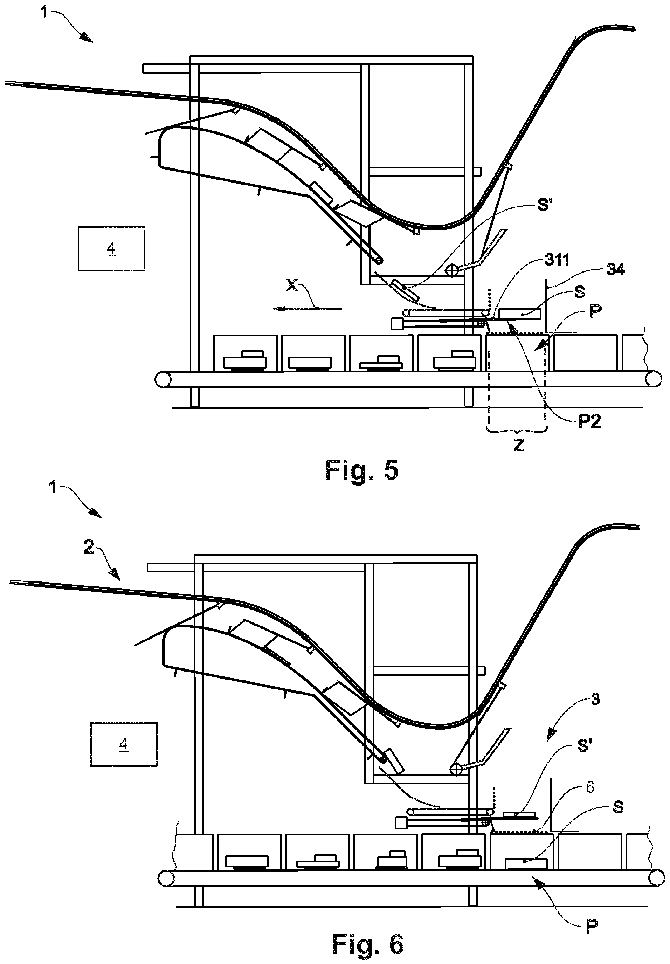

**Figur 5** zeigt das dritte Ausführungsbeispiel der Kommissionieranlage 1 beim Übergeben des ersten Stückguts S und zeitgleichen Anliefern eines weiteren Stückguts S'. Die In der gezeigten Abgabeposition P2 gibt das Übergabeelement 31 den Übergabebereich Ü derart frei, so dass das auf dem Übergabeelement 31 aufgenommene Stückgut S schwerkraftgetrieben durch den Übergabebereich Ü hindurch auf den Zusammenstellplatz P übergeben wird.

**Figur 6** zeigt das dritte Ausführungsbeispiel der Kommissionieranlage 1 beim Übergeben des weiteren Stückguts S' auf das erste Stückgut S zum Bilden eines Stapels. Wie gezeigt werden mehrere Stückgüter S, S' nacheinander im Wesentlichen mittig auf den Zusammenstellplatz P übergeben. Die Stückgüter S, S' werden hierzu übereinander positioniert und aufeinander abgelegt.

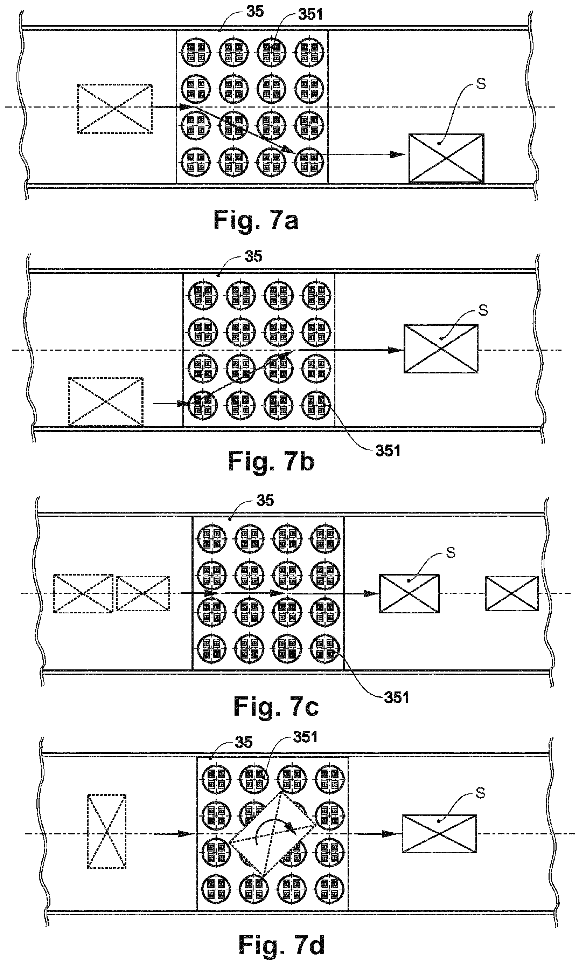

**Figur 7** zeigt eine Ausführungsvariante des Ausrichtungsmoduls 35. Das abgebildete Ausrichtungsmodul 35 weist angetriebene Ausrichtungselemente 351 auf, mittels derer das Stückgut S entlang und/oder seitlich bezüglich einer Förderrichtung X ausrichtbar ist. Die über die Rutsche 23 der Anfördervorrichtung 2 angeförderten Stückgüter S, S' kommen nicht ausgerichtet an. Das im gezeigten Ausführungsbeispiel stromaufwärts vor dem Anförderer 32 angeordnete Ausrichtungsmodul 35 weist Ausrichtungselemente 351 in Form von Rollen, Allseitenrädern oder Kugeln auf. Kugeln bieten im Vergleich zu Rollen oder Allseitenrädern eine höhere Beweglichkeit und Flexibilität in einer Fördersystemanwendung. Die Ausrichtungselemente 351 sind einzeln und unbabhängig voneinander angetrieben, um die Stückgüter S, S' beim Fördern auf dem Ausrichtungsmodul 35 entlang der Förderrichtung X und/oder seitlich hierzu auszurichten.

Die Figuren 7a und 7b zeigen ein Ausrichten von Stückgut S, S' bezüglich der Förderrichtung X. Figur 7c zeigt ein Beabstanden von Stückgut S, S' zueinander entlang der Förderrichtung X und in Figur 7d zeigt ein Drehen von Stückgut S. Um eine Ausrichtung eines angeförderten Stückguts S in eine Sollausrichtung zu überführen, ist oberhalb des Ausrichtungsmoduls 35 eine Sensoreinheit 352 angeordnet, mittels der eine Ausrichtung des Stückguts S auf dem Ausrichtungsmodul 35 detektierbar ist. Basierend auf einem von der Sensoreinheit 352 gemessenen und an eine Steuereinrichtung 4 gesendeten Sensorsignals wird mittels der Steuereinrichtung 4 das Stückgut S durch ein aktives und gerichtetes Antreiben der Ausrichtungselemente 351 auf dem Ausrichtungsmodul 35 ausgerichtet und kann zusätzlich noch zu einem stromaufwärts oder stromabwärts angeordneten Stückgut S' beabstandet werden. Das Stückgut S wird dann wie gezeigt ausgerichtet und beabstandet an den Anförderer 32 übergeben und von diesem an das Übergabeelement 31 übergeben.

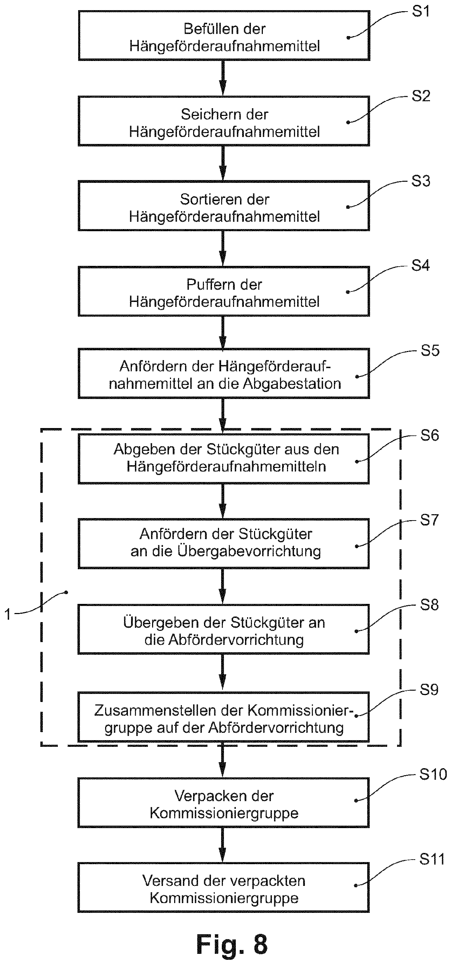

**Figur 8** zeigt ein Ablaufdiagramm einer Logistikanlage welche ein Ausführungsbeispiel der Kommissionieranlage umfasst. Die Logistikanlage umfasst neben der Kommissionieranlage noch eine Lagervorrichtung und eine Sortiervorrichtung, sowie eine Speichervorrichtung. Die Stückgüter werden eingangsseitig der Logistikanlage angeliefert, beispielsweise mittels eines LKWs.

Zum Transport der Waren von Aufgabeplätzen durch die Logistikanlage können diese mittels Hängeförderaufnahmemittelen transportiert werden. Zum Befüllen der Hängeförderaufnahmemittel kann die Logistikanlage eine Vorrichtung zum Befüllen (S1) der Hängeförderaufnahmemittel aufweisen. Die Hängeförderaufnahmemittel sind im unbefüllten Zustand bereits an dem Hängeförderer mittels Laufwagen angeordnet und in einer Wartestellung bereitgehalten. Die Laufwagen sind hierbei an einer Laufschiene in Laufschienenrichtung beweglich gelagert und die Hängeförderaufnahmemittel jeweils nach unten hängend zur Aufnahme von Stückgutgut angeordnet.

Das Hängeförderaufnahmemittel kann dabei während des Transports in der Befüllvorrichtung an einem Laufschienenstück hängend transportiert werden, welches einem Abschnitt der Laufschiene entspricht und welches wahlweise an ein Ende der ersten Laufschiene bzw. der zweiten Laufschiene anschliessbar ist. In der Befüllvorrichtung werden die Hängeförderaufnahmemittel zum Befüllen typischerweise gedreht oder verschwenkt. Hierzu ist vorteilhaft eine Wirkanordnung vorgesehen, mit welcher die Transportelemente an einer bestimmten Stelle des Förderwegs um einen bestimmten Drehwinkel zur senkrechten Mittelachse des Hängeförderaufnahmemittels gedreht werden können, wobei typischerweise ein Aufhängehaken an der Aufhängung der Hängeförderaufnahmemittel von der ersten Position in eine zweite Position beziehungsweise von der zweiten Position in die erste Position überführbar ist. Alternativ können verschwenkten Hängeförderaufnahmemittel mittels einer Zufördereinrichtung befüllt werden.

Zum Speichern (S2) der Stückgüter innerhalb der Logistikanlage kann weiterhin ein Batchpuffer zur Bereitstellung von Warengruppen vorgesehen sein. Weiterhin kann die Logistikanlage einen oder mehrere Matrix- Sortierer zum batchweisen Sortieren (S3) der Waren umfassen. Eine Mehrzahl von Hängeförderaufnahmemitteln, welche jeweils eine Aufnahmeeinheit, vorzugsweise in Form eines Hängeförderaufnahmemittels umfassen, kann zur Aufnahme der Waren im Matrix-Sortierer vorgesehen sein. Ein Matrix-Sortierer kann hierbei auch mehrere Sortierstufen aufweisen.

Falls der Matrix-Sortierer innerhalb der Logistikanlage stromabwärts des Batchpuffers und/oder der Befüllvorrichtung angeordnet ist, kann dieser die bereits befüllten Hängeförderaufnahmemittel des Batchpuffers und/oder der Befüllvorrichtung übernehmen. Der Matrix-Sortierer umfasst typischerweise mindestens einen Umlaufförderer zum Fördern der Hängeförderaufnahmemittel, wobei die Logistikanlage eine Steuerung aufweist, welche ausgelegt ist, die Fördergeschwindigkeit des Umlaufförderers dynamisch derart zu steuern, dass die Fördergeschwindigkeit von mindestens einem Parameter, beispielsweise Grösse und/oder Gewicht, der geförderten Hängeförderaufnahmemittel und/oder Waren abhängt.

Nach dem Sortieren werden die Hängeförderaufnahmemittel typischerweise gepuffert (S4). Der Batchpuffer kann neben dem Matrix Förderer weitere Förderer, vorzugsweise weitere Umlaufförderer, aufweisen, welche ausgelegt sind, die Hängeförderaufnahmemittel mit einer konstanten Fördergeschwindigkeit zu fördern. Die Steuerung kann dazu ausgelegt sein, die Fördergeschwindigkeit des Matrixförderers derart zu steuern, dass die Fördergeschwindigkeit des Matrixförderers in mindestens einem Batch höher als die konstante Fördergeschwindigkeit der weiteren Förderer ist.

Der Umlaufförderer ist typischerweise dazu ausgelegt, die Hängeförderaufnahmemittel in einer Sortierstufe zu- und/oder von einer Sortierstufe wegzuführen. Eine Sortierstufe des Matrix-Sortierers kann eine Mehrzahl von linearen Pufferstrecken in Form von Stichen aufweisen, welche durch Weichen mit dem Matrixförderer verbunden sind. Die Pufferstrecken sind vorzugsweise als Gravitationsstrecken mit einem Gefälle derart ausgebildet, dass die Hängeförderaufnahmemittel in den Gravitationsstrecken schwerkraftbedingt förderbar sind. Die Stiche können als eine Mehrzahl von linearen Speicherstrecken ausgeführt sein, in welche vorzugsweise jeweils ein Batch oder zwei Batches einspeicherbar sind.

Die Logistikanlage kann weiterhin eine Datenbank aufweisen, in welcher die Parameter, vorzugsweise das Gewicht und/oder die Grösse, der in den Matrix-Sortierer einfahrenden Hängeförderaufnahmemittel und/oder Waren, hinterlegt sind. Der Matrix-Sortierer kann eine Mehrzahl von Sortierstufen und eine Mehrzahl von Matrixförderern umfassen, welche jeweils einer Sortierstufe oder zwei Sortierstufen zugeordnet sind. Die Steuerung ist typischerweise derart ausgelegt, die Fördergeschwindigkeit jedes Umlaufförderers individuell zu steuern.

Neben dem Matrix Sortierer, kann die Logistikanlage auch einen Zwischenspeicher umfassen. Dieser ist üblicherweise vor oder nach dem Batchpuffer angeordnet. Der wenigstens eine Zwischenspeicher weist typischerweise einen dynamischen Speicher zur Zwischenspeicherung der für die Kommissionierung bereitgestellten Waren/Stückgüter und einen dem dynamischen Speicher nachgeschalteten Abrufspeicher zum Speichern von aus dem dynamischen Speicher ausgespeicherten und dabei vorsortierten Waren auf. Der dynamische Speicher und der Abrufspeicher können innerhalb eines gemeinsamen Umlaufförderers angeordnet sein oder über den gemeinsamen Umlaufförderer miteinander in Verbindung stehen.

Der Umlaufförderer ist typischerweise ein Förderer, mit welchem die Waren in einem geschlossenen Umlauf bzw. Kreislauf gefördert werden können. An verschiedenen Stellen des Umlaufförderers können dabei betätigbare oder schaltbare Weichen vorgesehen werden. Die Weichen ermöglichen ein gezieltes Einfahren von neuen Waren in den Umlauf bzw. ein Ausfahren von im Umlauf zirkulierenden Waren. Die Waren sind dabei in den Hängeförderaufnahmemittel, vorzugsweise in Form von Hängefördertaschen unterteilt, die jeweils für sich bewegt und dem Umlauf zugefügt bzw. dem Umlauf entnommen werden können.

Die im Umlauf zirkulierenden und im dynamischen Speicher abgelegten Waren liegen in einer bestimmten Reihenfolge vor, die sich meist nach dem zeitlich gestaffelten Ausspeichern der Waren aus dem Warenlager richtet, nicht jedoch den durch die Aufträge bestimmten Warenzusammenstellungen ("Batches") entspricht. Durch eine Vorsortierung der Waren im Abrufspeicher werden die Waren bereits in einer den Aufträgen entsprechenden Zusammenstellung zusammengefasst, sodass ein nachfolgender Matrixsortierer oder eine Kommissionieranlage von Sortierungsarbeit entlastet und entsprechend kleiner dimensioniert oder ganz eingespart werden kann.

Die so vorsortierten und für den Versand vorbereiteten Warensendungen werden dann an die Kommissionieranlage angefördert (S7), in der die Stückgüter aus den Hängeförderaufnahmemitteln übergeben (S8) und nach dem Bilden von Kommissioniergruppen (S9) auf der Abfördervorrichtung der Verpackung (S10) und dem Versand (S11) zugeführt werden. Die Schritte S7 - S9 werden hierbei mittels einer Kommissionieranlage nach den Figuren 1 bis 6 ausgeführt.

Als Ausgangsmaterial für die Verpackung (S10) werden üblicherweise rechteckige oder quadratische flache Kartonbahnen bereitgestellt. Alternativ kann auch ein Endlosband Karton auf dem Abförderer bereitgestellt werden. Die Kommissioniergruppen können mittels des Übergabeelements auf die Kartonbahn übergeben werden. Um die auf dem Zusammenstellplatz mittels des Übergabeelements zusammengestellte Kommissioniergruppe kann eine Verpackung herumgebildet werden, vorzugsweise in Form eines Kartons der um die Kommissioniergruppe herumgefaltet wird. Hierbei ist nicht einfach ein Verpacken in einen Karton zu verstehen, sondern das Bilden eines Kartons in Form eines Pakets. Hierbei kann basierend auf den erfassten Abmessungen, Länge, Breite und Höhe ein Pakete durch maschinelles Einschneiden, Falten und Verkleben des flächigen Ausgangsmaterials gebildet werden. Die so verpackten Kommissioniergruppen werden anschliessend versandt (S11).

## Patentansprüche

1. Kommissionieranlage (1) zum Transport und dem Bereitstellen von Stückgütern (S, S') umfassend:
a. eine Anfördervorrichtung (2) umfassend einen Hängeförderer (21) zum Anfördern der Stückgüter (S, S'), sowie eine Abgabestation (22) zum Abgeben der Stückgüter (S, S') vom Hängeförderer (2.1) an
b. eine Übergabevorrichtung (3) zum Zusammenstellen der angeförderten Stückgüter (S, S'), welche Übergabevorrichtung (3) ein horizontal verfahrbares Übergabeelement (31) aufweist, mittels dem die Stückgüter (S, S') auf einen Zusammenstellplatz (P) schwerkraftgetrieben zusammenstellbar sind.

2. Kommissionieranlage (1) nach Anspruch 1, **wobei** die Übergabevorrichtung (3) angrenzend an die Abgabestation (22) der Anfördervorrichtung (2) einen Anförderer (32) aufweist und das Übergabeelement (31) mindestens zwischen einer Aufnahmeposition (P1) zur Aufnahme eines angeförderten Stückguts (S) und mindestens einer Abgabeposition (P2) zur Abgabe eines sich auf dem Übergabeelement (31) befindlichen Stückguts (S), insbesondere horizontal, verfahrbar ist.

3. Kommissionieranlage (1) nach Anspruch 2, **wobei** der Anförderer (32) beschleunig oder abbremsbar ist, sodass das jeweilige von der Anfördervorrichtung (2) angeförderte Stückgut (S) bereits in der Aufnahmeposition (P1) derart taktsynchron an das Übergabeelement (31) übergebbar ist, dass es in der Abgabeposition (P2) ebenfalls taktsynchron vom Übergabeelement (31) an einen nachgelagerten Abförderer (33) übergebbar ist.

4. Kommissionieranlage (1) nach Anspruch 2 oder 3, **wobei** das Übergabeelement (31) horizontal inkrementell verfahrbar ist, sodass das Stückgut (S) positioniert auf den Zusammenstellplatz (P) übergebbar ist, vorzugsweise mittig, aussermittig oder in Abhängigkeit von weiteren Stückgütern (S'), insbesondere gestapelt oder überlappend.

5. Kommissionieranlage (1) nach einem der vorhergehenden Ansprüche, **wobei** die Übergabevorrichtung (3) ein Ausrichtungsmodul (35) umfasst, welches angetriebene Ausrichtungselemente (351) umfasst, mittels derer das Stückgut (S) entlang und/oder seitlich bezüglich einer Förderrichtung (X) ausrichtbar ist, wobei das Ausrichtungsmodul (35) vorzugsweise stromaufwärts vor dem Anförderer (32) angeordnet ist.

6. Kommissionieranlage (1) nach Anspruch 5, **wobei** oberhalb des Ausrichtungsmoduls (35) eine Sensoreinheit (352) angeordnet ist, mittels der eine Ausrichtung des Stückguts (S) auf dem Ausrichtungsmodul (35) detektierbar ist und basierend auf einem von der Sensoreinheit (352) gemessenen und an eine Steuereinrichtung (4) gesendeten Sensorsignals, mittels der Steuereinrichtung (4) das Stückgut (S) durch ein aktives und gerichtetes antreiben der Ausrichtungselemente (351) auf dem Ausrichtungsmodul (35) ausrichtbar ist und/oder zu einem stromaufwärts oder stromabwärts angeordneten Stückgut (S) beabstandbar ist.

7. Kommissionieranlage (1) nach einem der Ansprüche 2 bis 6, **wobei** an dem distalen Ende (321) des Anförderers (32) eine Sensoreinheit (322) angeordnet ist, mittels der das Eintreffen eines vom Anförderer (32) angeförderten Stückguts (S) detektierbar ist und basierend auf einem von der Sensoreinheit (322) gemessenen und an die Steuereinrichtung (4) gesendeten ersten Sensorsignals, mittels der Steuereinrichtung (4) das Übergabeelement (31), insbesondere von der Abgabeposition (P2) in die Aufnahmeposition (P1), verfahrbar ist, um das angeförderte und von der Sensoreinheit (322) detektierte Stückgut (S) aufzunehmen.

8. Kommissionieranlage (1) nach Anspruch 7, **wobei** mittels der Steuereinrichtung (4) ferner der Vorbeitransport des vom Anförderers (32) angeförderten Stückguts (S) überwachbar ist, wobei beim Verlassen des Sensorbereichs der Sensoreinheits (322) ein zweites Sensorsignal an die Steuereinrichtung (4) gesendet wird und basierend auf dem zweiten Sensorsignal durch die Steuereinrichtung (4) das Übergabeelement (31) von der Aufnahmeposition (P1) zurück in die Abgabeposition (P2) verfahrbar ist um das aufgenommene Stückgut (S) schwerkraftgetrieben auf den Zusammenstellplatz (P) zu übergeben.

9. Kommissionieranlage (1) nach einem der vorhergehenden Ansprüche, **wobei** das Übergabeelement (31) derart ausgebildet und beschleunigt bewegbar ist, sodass das darauf aufgenommene Stückgut (S) aufgrund dessen Trägheit in der Horizontalen im Wesentlichen unbewegt, schwerkraftgetrieben auf den Zusammenstellplatz (P) übergebbar ist.

10. Kommissionieranlage (1) nach einem der vorhergehenden Ansprüche, **wobei** der Zusammenstellplatz (S) auf dem Abförderer (33) angeordnet ist, sodass eine darauf gebildete Kommissioniergruppe (KG) mittels des Abförderers (33) abförderbar ist, wobei der Zusammenstellplatz (P) in Form eines virtuellen Zusammenstellplatzes (V) ausgeführt ist oder als ein physischer Rahmen (R) der auf dem Abförderer (33) angeordnet ist oder innerhalb eines Aufnahmebehältnisses (A), das auf dem Abförderer (33) angeordnet ist.

11. Kommissionieranlage (1) nach einem der vorhergehenden Ansprüche, **wobei** das Übergabeelement (31) unterhalb des Anföderers (32) angeordnet ist und horizontal bezüglich eines distalen Endes (321) des Anförderers (32) verfahrbar ist, wobei es in der Aufnahmeposition (P1) bezüglich des distalen Endes (321) hervorstehend angeordnet ist, um den Übergabebereich (Ü) zumindest teilweise zu verschliessen und in der Abgabeposition (P2) derart unter den Anföderer (32) zurückgezogen ist, um den Übergabebereich (Ü) freizugeben.

12. Kommissionieranlage (1) nach einem der vorhergehenden Ansprüche, **wobei** das horizontal verfahrbare Übergabeelement (31) der Übergabevorrichtung (3) als Platte (311) ausgeführt ist, die optional in seitlichen Führungen (312) beweglich gelagert ist oder als drehbare Platte ausgeführt ist, welcher zur Übergabe des Stückguts (S) vorzugsweise unterhalb des Anförderers (32) verdrehbar gelagert ist.

13. Kommissionieranlage (1) nach einem der Ansprüche 1 bis 11, **wobei** das horizontal verfahrbare Übergabeelement (31) der Übergabevorrichtung (3) als Bandförderer (313) mit einem verfahrbaren Bandabschnitt (314) ausgeführt ist, vorzugsweise in Form eines Teleskopförderbandes.

14. Kommissionieranlage (1) nach einem der vorhergehenden Ansprüche, **wobei** die Übergabevorrichtung (3) einen Anschlag (34) zur Positionierung der Stückgüter (S, S') umfasst, wobei der Übergabebereich (Ü) von dem Anschlag (34) und dem distalen Ende (321) des Anförderers (32) begrenzt wird, durch welches hindurch das Stückgut (S) schwerkraftgetrieben auf den Zusammenstellplatz (P) übergebbar ist.

15. Kommissionieranlage (1) nach einem der vorhergehenden Ansprüche, **wobei** die Übergabevorrichtung (3) eine Erkennungseinrichtung (6) umfasst, mittels derer in einer Draufsicht der Grundriss (G) der Kommissioniergruppe (KG) und/oder in einer Seitenansicht der Umriss (U) oder die Höhe (H) der Kommissioniergruppe (KG) zur Steuerung der Kommissionieranlage (1) ermittelbar ist.

16. Kommissionieranlage (1) nach einem der vorhergehenden Ansprüche, **wobei** der Hängeförderer (21) Hängeförderaufnahmemittel (211) in Form von Taschen, Körben, Beuteln oder Tragschlaufen umfasst mittels derer die Stückgüter (S, S') hängend förderbar sind und die Hängeförderaufnahmemittel (211) in Form von Taschen, Körben, Beuteln oder Tragschlaufen zum Abgeben der Stückgüter (S, S') vom Hängeförderer (21) ausleerbar sind, insbesondere durch Verschwenken ausleerbar sind.

17. Verfahren zum Transport und dem Bereitstellen von Stückgütern (S, S') umfassend mindestens die folgenden Verfahrensschritte:
a. Bereitstellen (S0) einer Kommissionieranlage (1) nach einem der vorhergehenden Ansprüche, umfassend eine Anfördervorrichtung (2), welche einen Hängeförderer (21) umfasst, sowie eine Abgabestation (22), sowie einer Übergabevorrichtung (3) mit einem horizontal verfahrbaren Übergabeelement (31);
b. Anfördern (S5) der Stückgüter (S, S') mittels des Hängeförderers (21) und Abgeben (S6) der Stückgüter (S, S') vom Hängeförderer (21) an die Übergabevorrichtung (3) mittels der Abgabestation (22);
c. Übergeben (S8) der angeförderten Stückgüter (S, S') mittels der Übergabevorrichtung (3) und Zusammenstellen (S9) auf einem Zusammenstellplatz (P).

18. Verfahren nach Anspruch 17, **wobei** die Übergabevorrichtung (3) angrenzend an die Abgabestation (22) der Anfördervorrichtung (2) einen Anförderer (32) aufweist und das Übergabeelement (31) zum Zusammenstellen (S9) zwischen einer Aufnahmeposition (P1) zur Aufnahme eines Stückguts (S) und einer Abgabeposition (P2) zur Abgabe des Stückguts (S) horizontal verfahren wird.

19. Verfahren nach Anspruch 17 oder 18, **wobei** mittels angetriebener Ausrichtungselemente (351) eines Ausrichtungsmoduls (35) das Stückgut (S) entlang und/oder seitlich bezüglich einer Förderrichtung (X) ausgerichtet wird und/oder zu einem stromaufwärts oder stromabwärts angeordneten Stückgut (S) beabstandet wird.

20. Verfahren nach einem der Ansprüche 17 bis 19, **wobei** das Übergabeelement (31) zum Zusammenstellen (S9) zeitgleich zum Anfördern (S2) horizontal bezüglich eines distalen Endes (321) des Anförderers (32) verfahren wird um ein vom Anförderer (32) angefördertes Stückgut (S) vom Anförderer (32) zu übernehmen.

21. Verfahren nach einem der Ansprüche 17 bis 20, **wobei** das Übergabeelement (31) zum Zusammenstellen (S9) des sich bereits auf dem Übergabeelement (31) befindlichen Stückguts (S) zeitgleich bezüglich des distalen Endes (321) des Anförderers (32) zurückgefahren wird, sodass das Stückgut (S) schwerkraftgetrieben durch den Übergabebereich (Ü) auf den Zusammenstellplatz (P) übergeben wird, insbesondere ausgerichtet zu übergben.

22. Verfahren nach Anspruch 21, **wobei** das Übergabeelement (31) beschleunigt, vorzugsweise ruckartig, zurückgefahren wird, sodass das darauf aufgenommene Stückgut (S) aufgrund dessen Trägheit in der Horizontalen im Wesentlichen unbewegt, anschliessend schwerkraftgetrieben auf den Zusammenstellplatz (P) herabfällt.

23. Verfahren nach einem der Ansprüche 17 bis 22, **wobei** das Übergabeelement (31) zum Zusammenstellen verfahren wird, sodass
a. das Stückgut (S) im Wesentlichen mittig auf den Zusammenstellplatz (P) zum Bilden einer Kommissioniergruppe (KG) übergeben wird, oder
b. das Stückgut (S) aussermittig auf den Zusammenstellplatz (P) zum Bilden mehrerer Kommissioniergruppen (KG) auf den Zusammenstellplatz (ST) übergeben wird, oder
c. das Übergabeelement (31) inkrementell weiterbewegt wird, sodass ein nachfolgendes Stückgut (S) überlappend auf den Zusammenstellplatz (P) auf ein vorangegangenes Stückgut (S) übergeben wird.

24. Verfahren nach einem der Ansprüche 17 bis 23, **wobei** um die auf dem Zusammenstellplatz (P) zusammengestellte Kommissioniergruppe (KG,) eine Verpackung herumgebildet wird, vorzugsweise in Form eines Kartons der um die Kommissioniergruppe (KG) herumgefaltet wird.
